# EUROPEAN PATENT SPECIFICATION

(11) **EP 0 533 767 B1**
(45) Date of publication and mention of the grant of the patent: **03.05.1995**
(21) Application number: 91911079.1
(22) Date of filing: 11.06.1991
(51) Int. Cl.: H02K 29/06, H02K 29/00, H02K 21/12, H02K 16/00

(54) **ELECTRIC MOTOR**
ELEKTRISCHER MOTOR
MOTEUR ELECTRIQUE

(30) Priority: 11.06.1990 US 536098
(43) Date of publication of application: 31.03.1993
(73) Proprietor: NAHIRNEY, Peter Michael, North Battleford, Saskatchewan S9A 3L1 (CA)
(72) Inventor: NAHIRNEY, Peter Michael, North Battleford, Saskatchewan S9A 3L1 (CA)
(74) Representative: W.P. THOMPSON & CO.
(86) International application number: CA9100200
(87) International publication number: WO9120120

(56) References cited:
- EP-A- 0 310 223
- GB-A- 2 025 168
- US-A- 3 330 975
- US-A- 3 488 566
- US-A- 4 754 183
- PATENT ABSTRACTS OF JAPAN, vol. 5, no. 66 (E-55)(738) 02 May 1981, &JP-A-56 15162 (OKI DENKI KOGYO) 13 February 1981

## Description

This invention relates to a an electric motor of the type which includes a plurality of permanent magnets mounted upon a rotor and a plurality of electromagnets mounted upon a stator arranged so that rotation of the rotor causes the permanent magnets to pass into cooperation with each of the electromagnets in turn and including means for applying voltage pulses to the electromagnets in timed sequence so that the cooperation between the permanent magnets and the electromagnets results in forces causing the rotor to rotate.

Conventional direct current motors of this type have previously been proposed but have a disadvantage of not utilizing the back electromotive force generated during commutation by the collapsing magnetic field at each coil after the voltage pulse is removed. This results in a reduced efficiency in that the energy present in the back electromotive force is merely dissipated.

US-A- 3488566 disclaimers and electric motor similar to the above type in which the rotor has a single permanent magnet and the stator has three electromagnets spaced at 180 degrees apart about the rotor axis.

GB-A-2025168 discloses an electric motor which has a squirrel cage rotor and three electromagnets spaced at 180 degrees apart about the rotor axis. Each electromagnet comprises a stator winding and a demagnetisation winding. When the current through one stator winding is switched off, the voltage thereby induced in the corresponding demagnetisation winding is used to cause current to flow through the next stator winding.

### SUMMARY OF THE INVENTION

It is an object of the present invention to provide an improved electric motor of the above type which is designed to utilise the back electromotive force.

According to the present invention, an electric motor comprising a stator, a rotor mounted for rotation relative to the stator about an axis, a first set of electromagnets mounted on the stator in equi-angularly spaced positions around the axis, a first set of permanent magnets mounted on the rotor in equi-angularly spaced positions around the axis and arranged such that, upon rotation of the rotor, each permanent magnet of the first set passes sequentially into cooperating position with each in turn of electromagnets of the first set, and means for applying voltage pulses to the electromagnets, whereby the electromagnets apply forces to the permanent magnets to cause the rotor to rotate about the axis is characterised in that a second set of electromagnets is mounted on the stator in equi-angularly spaced positions around the axis and a second set of permanent magnets is mounted on the rotor at equi-angularly spaced positions around the axis and arranged such that, upon rotation of the rotor, each permanent magnet of the second set passes sequentially into cooperating position with each in turn of electromagnets of the second set, the first sets of electromagnets and permanent magnets being spaced from the second sets of electromagnets and permanent magnets so that the permanent magnets of each set cooperate only with the electromagnets of the corresponding set and the number of permanent magnets in each set being the same as one another but different by an odd number from the number of electromagnets in each set, and is further characterised in that the voltage pulse-applying means is adapted to supply voltage pulses to the electromagnets of the second set with opposite polarity to that of the voltage pulses applied to the electromagnets of the first set and the permanent magnets are so arranged that the poles of the permanent magnets of the first set are reversed relative to the poles of the permanent magnets of the second set in order to cause rotation in the same direction and in that the electromagnets of the first set are angularly offset from the electromagnets of the second set and means are provided for communication current generated by the collapsing field of each electromagnet of each one of the sets to a respective one of electromagnets of the other one of the sets to tend to generate in said respective one of electromagnets of the other one of the sets said pulsed voltage.

The preferred embodiment of electric rotor according to the invention, uses a special design of rotor, efficient electromagnetic coil design together with high power permanent magnets, very low loss electromagnetic coil material and associated solid state switches and controls enabling an efficient pulsed motor design which recaptures some or all of the back electromotive force.

The invention is herein particularly described by reference to the accompanying drawings.

### DESCRIPTION OF THE DRAWINGS

Figure 1 is a schematic cross-sectional view through a motor according to a preferred typical embodiment of the invention.

Figure 2 is a schematic side elevational view of the stator of the motor of Figure 1.

Figure 3 is a schematic side elevational view of the rotor of the motor of Figure 1.

Figure 4 is a schematic circuit diagram showing one part of the circuit for controlling the generation and communication of voltage pulses to the electromagnetic coils of the motor of Figure 1.

Figure 5 is an illustration of the wave forms generated during operation of the motor of Figure 1.

### DETAILED DESCRIPTION

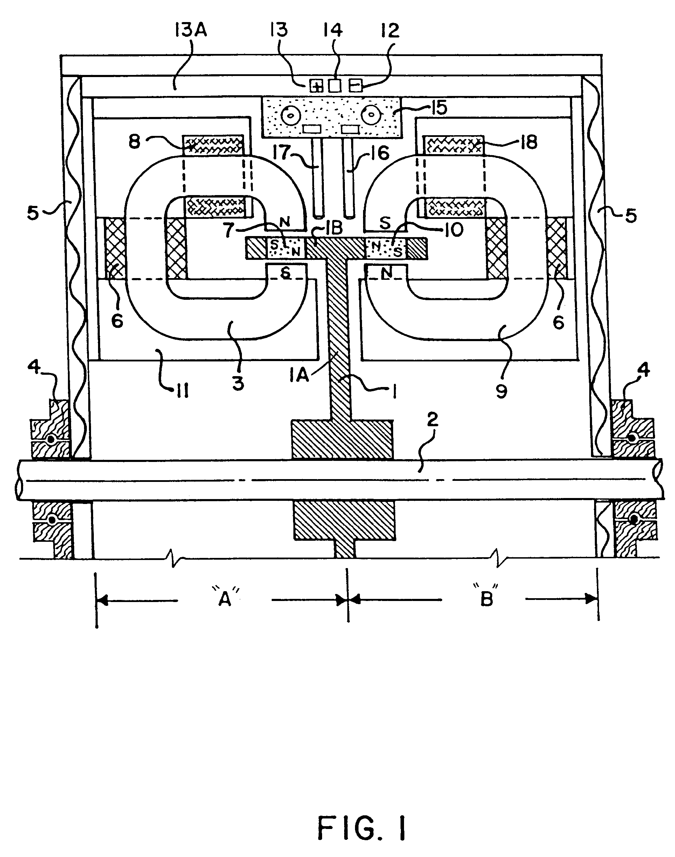

The motor of Figure 1 comprises a rotor 1 including a shaft 2 mounted in bearings 4 on a stator 5. The rotor includes a support disc 1A upon which is mounted an outer cylindrical body 1B including two cylindrical portions extending axially of the disc 1A in opposed directions so as to define two axially spaced portions of the rotor.

In one of the portions is mounted a set of permanent magnets 7 and on the other of the portions is mounted a set of permanent magnets 10. The poles of the magnets 10 are inverted relative to the poles of the magnets 7.

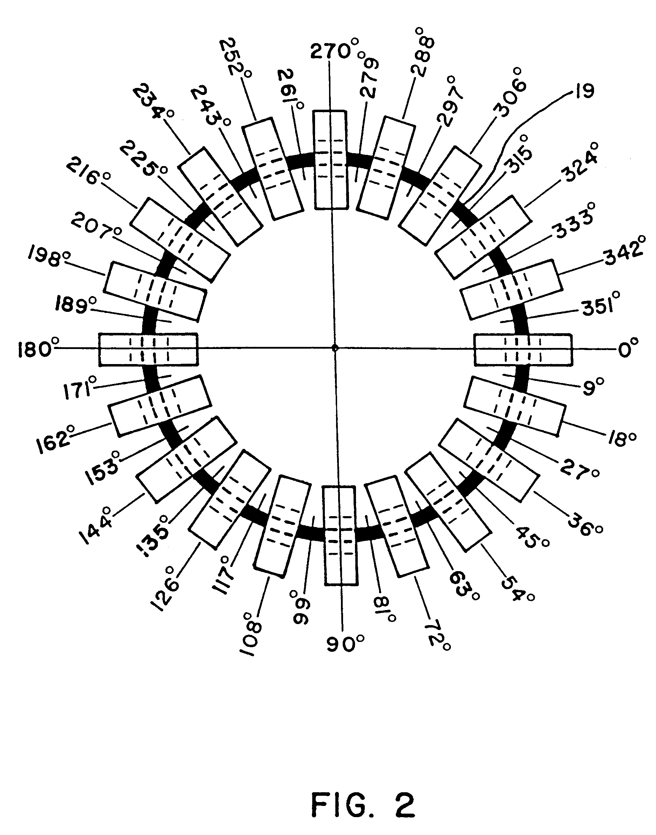

The stator 5 carries on mounting brackets 6 first and second sets of electromagnets at sides A and B of the rotors 3 and 9 respectively. The first set of electromagnets 3 is shown in Figure 2. The electromagnets 3 of the first set are spaced at angularly spaced locations around the axis with equal spacing between the electromagnets. The electromagnets 9 of the second set are similarly equally spaced around the axis but are offset relative to the electromagnets 3 of the first set by an angle equal to one half the angle between the electromagnets. The same number of electromagnets 3 is present in the first set as is present in the second set. The number of permanent magnets 7 is equal to a number which is different from the number of electromagnets 3 in that set by an odd number and preferably there is one fewer permanent magnet 7 than the number of electromagnets 3.

As explained hereinafter, the electromagnets 3 and 9 are supplied with voltage pulses so as to tend to cause a rotation effect of the rotor due to the cooperation between the permanent magnets 7, 10 and the electromagnets 3, 9 and due to the imbalance caused by the difference in number between the permanent magnets and the electromagnets. Voltage is applied to the electromagnets 3 of the first set through a bus 13 and is applied to the electromagnets 9 of the second set from a bus 12. The busses 12 and 13 together with a neutral bus 14 are mounted upon a cylindrical wall 13A forming part of the stator 5 and surrounding the rotor 1.

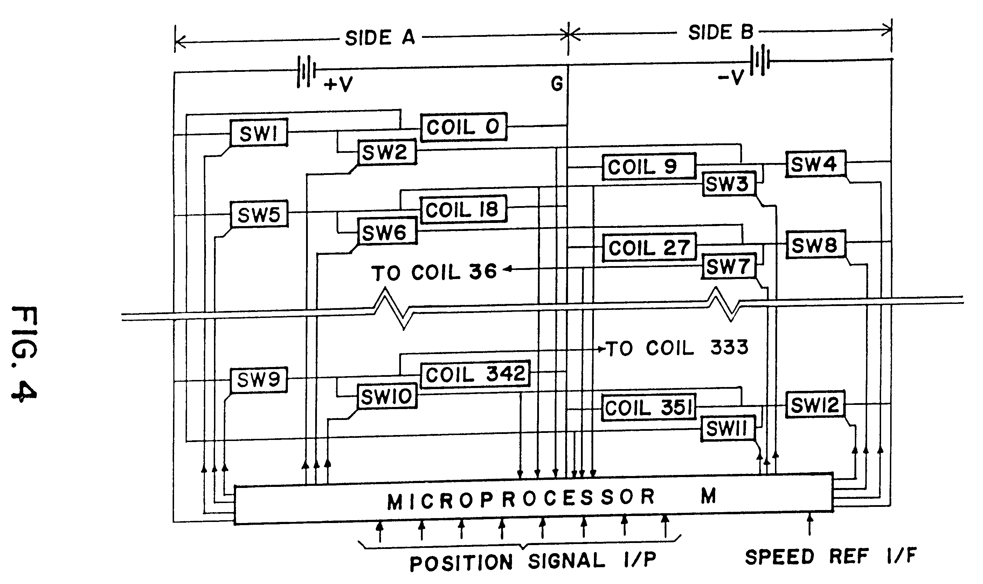

Each electromagnet is associated with a respective one of a plurality of circuit boards 15 whose circuits are shown in Figure 4.

Each of the circuit boards 15 carries a location detecting sensor with one of the sensors being indicated at 16 in relation to the coil illustrated at 9 in Figure 1 and another being shown at 17 in relation to the coil indicated at 3 in Figure 1. Each of these position locating devices 16 or 17 is arranged to locate a permanent magnet 10 or 7 so that the timing of pulses to the coil of the respective electromagnet 9 or 3 can be controlled as explained hereinafter.

Figure 1 shows the relationship of the main components of the motor. For illustration purposes, one electromagnet 3 and one electromagnet 9 are shown in the same plane; however, in practice, one of these electromagnets is behind or ahead of the other by the number of degrees equal to the total number of all electromagnets divided into 360 degrees. The above comment also applies to the permanent magnets 7 and 10 in the rotor, except that one permanent magnet is ahead or behind the other by the number of degrees equal to two less than the total number of electromagnets divided into 360 degrees.

In one example the motor has a total of 40 electromagnets and 38 permanent magnets (hereinafter referred to as the 40/38 motor); however, the motor can consist of any number of electromagnets and the proportional number of permanent magnets. Different shapes, sizes and mounting orientations of the electromagnets, different shapes, thickness and sizes and orientation of the permanent magnets; different rotor shape and sizes and as mentioned above different numbers of rotor/stator assemblies can be used to design a motor for various applications.

The stator electromagnets are evenly spaced around the rotor 1 and fastened to the stator 5. The electromagnets for a 40/38 motor are spaced at 360 divided by 40 = 9 degrees. Twenty electromagnets are mounted on each of sides A and B and define a respective coil gap which surrounds the respective portion of the cylindrical body 1B of the rotor which carries permanent magnets through the electromagnetic coil gaps.

The twenty electromagnets 3 are equally spaced (18 degrees) on one side of the stator (Side A) and the twenty other electromagnets 9 are spaced equally on the other side of the stator (Side B) but are angularly offset so they are midway between the electromagnets 3 on side A. Refer to Figure 2 for the actual degrees of each coil. Hereinafter the electromagnets will be named after the position they occur in degrees. If the stator shown in Figure 1 is viewed from the left hand side then all electromagnets on Side "A" shall be the even number, i.e., 0, 18, 36, 54, 72, 90, 108, 162, 180, 198, 216, 234, 252, 270, 288, 306, 324 and 342. Item 19 of Figure 2 shows the orbital path of all permanent magnets through the gaps of the electromagnets. Only the centre lines of the electromagnets for Side "B" are shown on this drawing in order to distinguish between Side "A" and Side "B" electromagnets. The Side "B" electromagnets would be named 9, 27, 45, 63, 81, 99, 117, 135, 153, 171, 189, 207, 225, 243, 261, 279, 297, 315, 333, 351.

Assuming the motor operates in the attraction mode and the electromagnets 3 on Side "A" are energized by a positive voltage and connected so that the outsides of the electromagnets are poled to be magnetically north at the outside of the gap when, all the 19 permanent magnets 7 in Side "A" of the motor are poled so the magnetic south is facing away from the centre of the rotor. The spacing of all permanent magnets would be 360 degrees divided by 38. The electromagnets on Side "B" of the rotor are energized by a negative voltage and all the electromagnets are connected so that the electromagnets are poled to be magnetically south at the outside of the gap when all the 19 permanent magnets in Side "B" of the motor would be poled so the magnetic north is facing away from the centre of the rotor. The rotor is brushless.

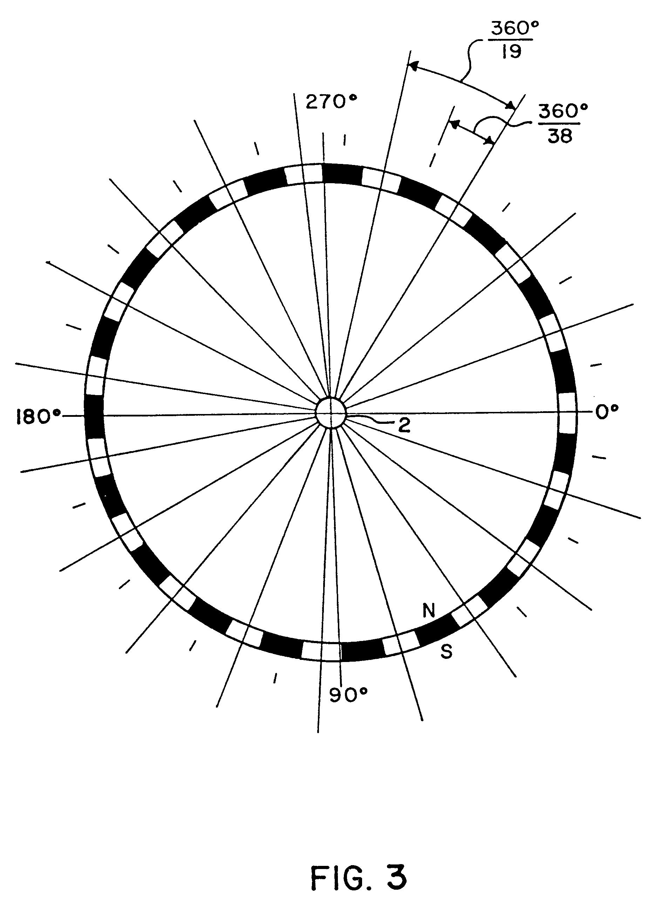

Figure 3 shows all Side "A" permanent magnets mounted in the rotor. Side "B" permanent magnets locations are identified by centreline locations only.

Turning now to Figure 4, the left hand set of electromagnets indicated at 3 in Figure 1 are indicated on the left hand side (side A) of Figure 4 as coils 0, 18 etc. through to coil 342. The electromagnets on the right hand side (side B) indicated as coil 9, 27, through to coil 351 are equivalent to the set of electromagnets on the right hand side indicated at 9 in Figure 1. Each of the coils on the left hand side is connected to the bus 13 and to the neutral return 14 and each of the coils on the right hand side is connected to the bus 12 and to the neutral return 14. The communication of a voltage pulse from the respective bus is controlled through a switch. Thus for coil 0, the switch is indicated at SW1, for coil 18 the switch is indicated at SW5, for coil 342 the switch is indicated at SW9, for coil 9 the switch is indicated at SW4, for coil 27 the switch is indicated at SW8 and for coil 351 the switch is indicated at SW12. Each of the switches is gated under control of a microprocessor M which emits a signal to control as required the respective one of the switches SW1, SW5, SW9, SW4, SW8 and SW12 etc.. The microprocessor has input signals from each of the position sensors 16 and 17 indicated at "Position Signal I/P". In addition, the microprocessor receives an input control I/F for controlling the speed of the motor by manual or other independant actuation indicated at "Speed Ref I/F".

If the motor is operating in the attraction mode, the rotor will turn in the clockwise direction with reference to Figure 2. The microprocessor is arranged to control the switches so that a voltage pulse is obtained every 9 degrees for every electromagnetic coil. Thus, the position detector for coil 0 enables the gate to switch SW1 through the microprocessor M. The gate enable time must be less than the time required for the rotor to move 9 degrees for a given speed. The firing time period for SW1 will be determined by the speed requirements.

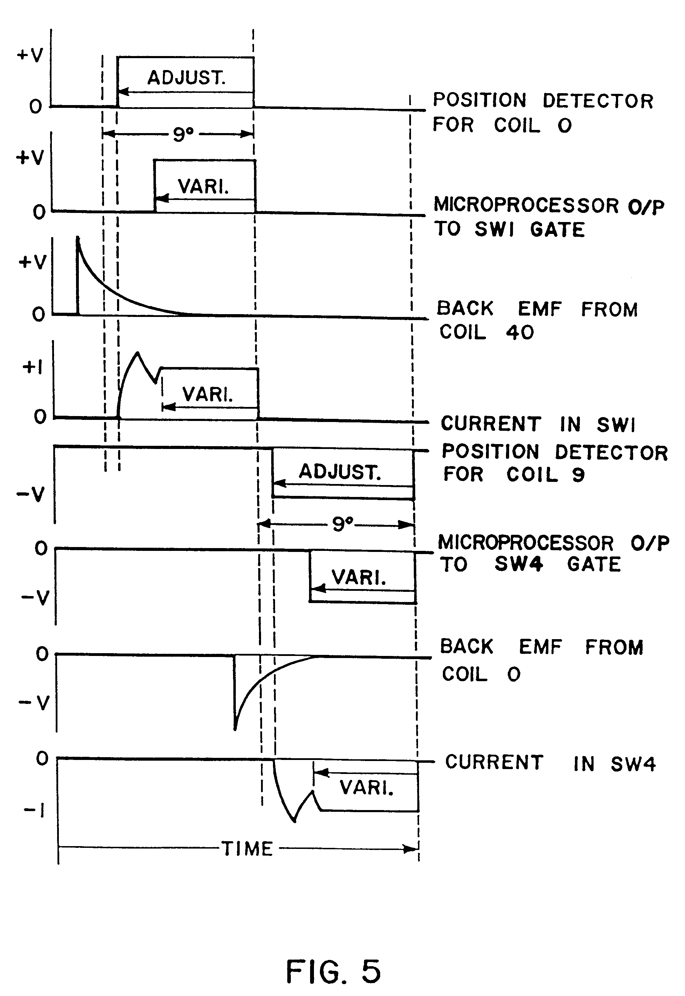

In Figure 5 is shown the waveform for one cycle of coil 0 and coil 9. Thus is indicated the position detector for coil 0 and the position detector for coil 9 and specifically the signal therefrom. The microprocessor thus acts to control the switches SW1 and SW4 to generate a voltage pulse which is supplied to the coil 0 and coil 9 respectively.

When the switch SW1 is shut off, this causes the magnetic field in the coil 0 to collapse which will generate an electromotive force or a negative pulse. This is indicated as the back EMF from coil 0 in Figure 5. The switch SW2 is then actuated by the microprocessor which detects the back EMF and thus current from the negative voltage pulse is communicated through the switch SW2 through the coil 9. As the coil 9 requires a negative voltage pulse, this negative voltage is added to the pulse from the bus 12 controlled by the switch SW4 as indicated as current in SW4 and this pulse is then communicated to the coil 9 to generate the required negative pulse therein.

Similarly as shown in the top part of Figure 5, the back EMF from coil 351 is communicated through switch 11 to coil 0 for addition to the pulse generated through SW1.

Similarly coil 18 cooperates with a switch SW6, coil 342 cooperates with a switch SW10 and coil 27 cooperates with a switch SW7 for communicating the back EMF voltage pulse to the next adjacent coil.

The switches shown in Figure 4 are commercially available high power solid state switching devices, such as SCRS, TRIACS, Transistors etc.. The circuit including the switches can include capacatitor and/or inductor arrangements arranged in conjunction with the switch circuits on the circuit board 15 to provide a shaping of the energy pulses obtained by the addition of the pulse from the next adjacent coil and the pulse from the bus to obtain the desired operating characteristics for the motor.

The speed of the motor is controlled by the shape and length of the pulses under control of the microprocessor. The polarity of the pulses can be changed by reversing the wiring of the system and this way the motor can be operated either in attraction or repulsion mode in that the poles of the electromagnets can be reversed and thus cooperate with the permanent magnets in the attraction or repulsion mode.

The circuitry can be modified so that dynamic braking can be provided by recharging the supply battery or by dumping the generated electrical energy into a resistive load. This is controlled by the microprocessor to generate voltage pulses as required for the dynamic braking.

The motor described can in principle be operated by standard commercial alternating current power, provided that a centre-tapped secondary transformer with the necessary output voltage is available.

The rotor/stator assemblies described herein can be mounted upon a single common shaft; alternatively the arrangement can be split by the provision of separate shafts so that additional electromagnetic coil mounting space is made available to produce smaller diameter motors. Additional sets of coils and permanent magnets can be employed to provide additional power with a similar arrangement of communication of voltage pulses from the primary source and from the back EMF being provided.

The motor according to the present invention as described above has the following advantages;
1. The back electromotive force from a denergized electromagnet is utilized to the maximum possible. Only the small voltage drop across the solid state switch which is driven into saturation by self biased circuitry consumes a small percentage of the power.
2. The collection of the back electromotive force is the most efficient possible because the collapsing magnetic field uses the same windings and another set of solid state circuitry to steer the energy from the collapsing field to the next driven electromagnet (reversed poled). Some other embodiments of the invention have used separate coils but that type of arrangement results in a less efficient magnetic circuit.
3. The installation of permanent magnets in the rotor eliminates the need for a commutator i.e. no frictional loss and no I R loss in the rotor conductors.
4. All electromagnets work in the same driven direction and the back electromotive force is switched ahead to a reverse poled electromagnet whose residual magnetism is already in the desired polarity; hence energy is not wasted in pole reversal of the magnetic material in the electromagnetic coil core.
5. The failure of any one and possibly more driven coils or solid state circuitry will not result in motor failure, only reduced output.
6. The adjacent alternating sequencing of the electrogmagnet electrical drive circuits permits very short conductor runs, thereby minimizing magnetic pickup and conductor I.R. loss.
7. The motor can be operated in an attraction or repulsion mode thereby rendering it bi-directional.
8. Circuitry can be provided to enable dynamic braking by operating the motor as a generator and recharging battery or steering the energy into a resistive load.
9. The design can be readily changed to meet the requirements of a wide range of applications. Adjustable parameters include; rotor diameter, size of the permanent magnets and electromagnets, orientation of the permanent magnets and electromagnets and the number of rotor/stator assemblies on the same shaft.
10. Speed control by controlling the length of the drive pulse.
11. The dual equal and opposite voltage sources eliminates the need to match solid state devices, such as NPN and PNP transistors, identical devices can be used throughout.
12. The motor is capable of high output torque due to the favourable angle of interaction between the electromagnet and permanent magnet magnetic fields.
13. The normal problems of high peak inverse voltages generated by a collapsing magnetic field is minimized by self-biasing a solid state switching device so the input impedance, which the back electromotive force encounters, is the same as the output impedance for the electromagnet in which the magnetic field is collapsing (all the electromagnets are constructed the same).
14. Maximum energy transfer of the back electromotive force occurs because the output impedance is equal to the input impedance.

## Claims

1. An electric motor comprising a stator (5) a rotor (1) mounted for rotation relative to the stator (5) about an axis, a first set of electromagnets (3) mounted on the stator (5) in equi-angularly spaced positions around the axis, a first set of permanent magnets (7) mounted on the rotor (1) in equi-angularly spaced positions around the axis and arranged such that, upon rotation of the rotor (1) each permanent magnet (7) of the first set passes sequentially into cooperating position with each in turn of electromagnets (3) of the first set, and means (15) for applying voltage pulses to the electromagnets (3), whereby the electromagnets (3) apply forces to the permanent magnets (7) to cause the rotor (1) to rotate about the axis, characterised in that a second set of electromagnets (9) is mounted on the stator (5) in equi-angularly spaced positions around the axis and a second set of permanent magnets (10) is mounted on the rotor (1) at equi-angularly spaced positions around the axis and arranged such that, upon rotation of the rotor (1), each permanent magnet (10) of the second set passes sequentially into cooperating position with each in turn of electromagnets (9) of the second set, the first sets of electromagnets (3) and permanent magnets (7) being spaced from the second sets of electromagnets (9) and permanent magnets (10) so that the permanent magnets (7 or 10) of each set cooperate only with the electromagnets (3 or 9) of the corresponding set and the number of permanent magnets (7 or 10) in each set being the same as one another but different by an odd number from the number of electromagnets (3 or 9) in each set, and further characterised in that the voltage pulse applying means (15) is adapted to supply voltage pulses to the electromagnets (9) of the second set with opposite polarity to that of the voltage pulses applied to the electromagnets (3) of the first set and the permanent magnets (7 and 10) are so arranged that the poles of the permanent magnets (7) of the first set are reversed relative to the poles of the permanent magnets (10) of the second set in order to cause rotation in the same direction and in that the electromagnets (3) of the first set are angularly offset from the electromagnets (9) of the second set and means (SW2, SW3, SW6, SW7, SW10, SW11) are provided for communicating current generated by the collapsing field of each electromagnet (3 or 10) of each one of the sets to a respective one of electromagnets (10 or 3) of the other one of the sets to tend to generate in said respective one of electromagnets (10 or 3) of the other one of the sets said pulsed voltage.

2. A motor according to claim 1, wherein the number of permanent magnets (7 or 10) of each set is less than the number of electromagnets (3 or 9) of each set by one.

3. A motor according to claim 1 or 2 wherein the first and second sets are axially spaced.

4. A motor according to claim 1, 2 or 3 including microprocessor controlled switch means controlling said voltage pulses and controlling communication of said current.

5. A motor according to claim 4, wherein the switch means is solid state.

6. A motor according to any preceding claim, wherein the voltage pulses for the first set of electromagnets (3) are generated from a DC voltage and wherein the voltage pulses for the second set of electromagnets (9) are generated from an equal magnitude from DC voltage but of opposite polarity.

7. A motor according to any preceding claim wherein said communicating means (SW2, SW3, SW6, SW7, SW10, SW11) is arranged to communicate said current from each electromagnet (3 or 9) of one set to the electromagnet (9 or 3) of the other set which is next adjacent in an angular direction to said each electromagnet (3 or 9).

8. A motor according to any preceding claim, including means (M) for adjusting the length of the voltage pulses.

9. A motor according to any preceding claims, wherein said voltage applying means (15) is arranged to apply to said electromagnets (3,9) a voltage can be adjusted from a positive voltage to a negative voltage to change the cooperation between the permanent magnets (7,10) and the electromagnets (3,9) between a repulsicn mode and an attraction mode.

10. A motor according to any preceding claim , including position-location means (16,17) for detecting the relative positions between the permanent magnets (10,7) and the electromagnets (9,3) for timing of the voltage pulses.

11. A motor according to claim 10, wherein the position-location means (16,17) included a hall effect device.

12. A motor according to claim 10, wherein the position-location means (16,17) includes a photo cell.

13. A motor according to any preceding claim wherein said voltage-applying means (15) includes means (M) for shaping the voltage pulses.

## Patentansprüche

1. Elektromotor, umfassend einen Stator (5), einen Rotor (1), der so montiert ist, daß er relativ zu dem Stator (5) um eine Achse rotiert, einen ersten Satz Elektromagneten (3), die in gleichmäßigen Abständen um die Achse verteilt auf dem Stator (5) montiert sind, einen ersten Satz Dauermagneten (7), die in gleichmäßigen Abständen um die Achse verteilt auf dem Rotor (1) montiert und so angeordnet sind, daß nach Rotation des Rotors (1) jeder Dauermagnet (7) des ersten Satzes nacheinander in Zusammenwirkungsposition mit dem jeweils folgenden Elektromagneten (3) des ersten Satzes geht, und Mittel (15) zum Anlegen von Spannungsimpulsen an die Elektromagnete (3), so daß die Elektromagnete (3) Kräfte auf die Dauermagnete (7) aufbringen, um eine Rotation des Rotors (1) um die Achse zu bewirken, dadurch gekennzeichnet, daß ein zweiter Satz Elektromagnete (9) in gleichmäßigen Abständen um die Achse verteilt auf dem Stator (5) montiert und ein zweiter Satz Dauermagnete (10) in gleichmäßigen Abständen um die Achse verteilt auf dem Rotor (1) montiert und so angeordnet ist, daß nach Rotation des Rotors (1) jeder Dauermagnet (10) des zweiten Satzes nacheinander in Zusammenwirkungsposition mit dem jeweils folgenden Elektromagneten (9) des zweiten Satzes geht, wobei die ersten Sätze Elektromagnete (3) und Dauermagnete (7) von den zweiten Sätzen Elektromagnete (9) und Dauermagnete (10) so beabstandet sind, daß die Dauermagneten (7 bzw. 10) jedes Satzes jeweils nur mit den Elektromagneten (3 bzw. 9) des entsprechenden Satzes zusammenwirken und die Zahl der Dauermagneten (7 bzw. 10) in jedem Satz untereinander gleich ist, sich aber um eine ungerade Zahl von der Zahl der Elektromagneten (3 bzw. 9) in jedem Satz unterscheidet, und weiterhin dadurch gekennzeichnet, daß das Spannungsimpuls-Anlegemittel (15) Spannungsimpulse zu den Elektromagneten (9) des zweiten Satzes mit einer der an die Elektromagnete (3) des ersten Satzes angelegten Spannungsimpulse entgegengesetzten Polarität speist, und daß die Dauermagnete (7 und 10) so angeordnet sind, daß die Pole der Dauermagnete (7) des ersten Satzes relativ zu den Polen der Dauermagnete (10) des zweiten Satzes umgekehrt sind, um eine Rotation in derselben Richtung zu erwirken, und dadurch, daß die Elektromagnete (3) des ersten Satzes winkelmäßig von den Elektromagneten (9) des zweiten Satzes versetzt sind und Mittel (SW2, SW3, SW6, SW7, SW10, SW11) zum Senden von durch das zusammenbrechende Feld jedes Elektromagneten (3 bzw. 10) der einzelnen Sätze erzeugtem Strom zu einem entsprechenden der Elektromagneten (10 bzw. 3) des anderen Satzes vorgesehen sind, um dazu zu neigen, in dem entsprechenden einen der Elektromagnete (10 bzw. 3) des anderen Satzes die genannte Impulsspannung zu erzeugen.

2. Motor nach Anspruch 1, wobei die Zahl der Dauermagnete (7 bzw. 10) jedes Satzes um eins geringer ist als die Zahl der Elektromagnete (3 bzw. 9) jedes Satzes.

3. Motor nach Anspruch 1 oder 2, wobei die ersten und zweiten Sätze axial voneinander beabstandet sind.

4. Motor nach Anspruch 1, 2 oder 3 mit einem mikroprozessor-gesteuerten Schaltmittel zum Steuern der genannten Spannungsimpulse und zum Steuern des Sendens des genannten Stroms.

5. Motor nach Anspruch 4, wobei das genannte Schaltmittel eine Halbleiterschaltung ist.

6. Motor nach einem der vorhergehenden Ansprüche, wobei die Spannungsimpulse für den ersten Satz Elektromagnete (3) aus einer Gleichspannung erzeugt werden und wobei die Spannungsimpulse für den zweiten Satz Elektromagnete (9) von einer gleichen Größe aus Gleichspannung erzeugt werden, jedoch mit entgegengesetzter Polarität.

7. Motor nach einem der vorhergehenden Ansprüche, wobei das genannte Sendemittel (SW2, SW3, SW6, SW7, SW10, SW11) den genannten Strom von jedem Elektromagnet (3 bzw. 9) eines Satzes zu dem Elektromagnet (9 bzw. 3) des anderen Satzes sendet, der in einer winkelmäßigen Richtung dem genannten jeweiligen Elektromagneten (3 bzw. 9) benachbart ist.

8. Motor nach einem der vorhergehenden Ansprüche mit Mitteln (M) zum Einstellen der Länge der Spannungsimpulse.

9. Motor nach einem der vorhergehenden Ansprüche, wobei das genannte Spannungsanlegemittel (15) eine Spannung an die genannten Elektromagnete (3, 9) anlegt, die zwischen einer positiven Spannung und einer negativen Spannung verstellt werden kann, um das Zusammenwirken zwischen den Dauermagneten (7, 10) und den Elektromagneten (3, 9) zwischen einem Abweisungs- und einem Anziehungsmodus zu wechseln.

10. Motor nach einem der vorhergehenden Ansprüche mit Positionsfeststellmitteln (16, 17) zum Ermitteln der relativen Positionen zwischen den Dauermagneten (10, 7) und den Elektromagneten (9, 3) zwecks zeitlicher Abstimmung der Spannungsimpulse.

11. Motor nach Anspruch 10, wobei die Positionsfeststellmittel (16, 17) ein Hall-Effekt-Bauelement aufweisen.

12. Motor nach Anspruch 10, wobei die Positionsfeststellmittel (16, 17) eine Fotozelle aufweisen.

13. Motor nach einem der vorhergehenden Ansprüche, wobei das genannte Spannungsanlegemittel (15) Mittel (M) zum Formen der Spannungsimpulse aufweist.

## Revendications

1. Moteur électrique comprenant un stator (5) un rotor (1) monté pour tourner relativement au stator (5) autour d'un axe, un premier ensemble d'électro-aimants (3) monté sur le stator (5) à des positions équi-angulairement espacées autour de l'axe, un premier ensemble d'aimants permanents (7) monté sur le rotor (1) à des positions équi-angulairement espacées autour de l'axe et disposées de telle sorte que, à la rotation du rotor (1) chaque aimant permanent (7) du premier ensemble passe séquentiellement en une position coopérante avec chacun à la fois des électro-aimants (3) du premier ensemble, et un moyen (15) pour appliquer des impulsions de tension aux électro-aimants (3), par quoi les électro-aimants (3) appliquent des forces aux aimants permanents (7) pour forcer le rotor (1) à tourner autour de l'axe, caractérisé en ce qu'un second ensemble d'électro-aimants (9) est monté sur le stator (5) à des positions équi-angulairement espacées autour de l'axe et un second ensemble d'aimants permanents (10) est monté sur le rotor (1) à des positions équi-angulairement espacées autour de l'axe et disposées de sorte que, à la rotation du rotor (1), chaque aimant permanent (10) du second ensemble passe séquentiellement en une position coopérante avec consécutivement électro-aimants (9) du second ensemble, les premiers ensembles d'électro-aimants (3) et d'aimants permanents (7) étant espacés des seconds ensembles d'électro-aimants (9) et d'aimants permanents (10) de sorte que les aimants permanents (7 ou 10) de chaque ensemble coopèrent uniquement avec les électro-aimants (3 ou 9) de l'ensemble correspondant et le nombre d'aimants permanents (7 ou 10) dans chaque ensemble étant le même que l'autre mais différent par un nombre impair du nombre d'électro-aimants (3 ou 9) dans chaque ensemble, et caractérisé en outre en ce que le moyen d'application d'impulsions de tension (15) est adapté pour fournir des impulsions de tension aux électro-aimants (9) du second ensemble avec une polarité opposée à celle des impulsions de tension appliquées aux électro-aimants (3) du premier ensemble et les aimants permanents (7 et 10) sont disposés de telle façon que les pôles des aimants permanents (7) du premier ensemble sont inversés relativement aux pôles des aimants permanents (10) du second ensemble afin de forcer la rotation dans le même sens et en ce que les électro-aimants (3) du premier ensemble sont décalés angulairement par rapport aux électro-aimants (9) du second ensemble et des moyens (SW2, SW3, SW6, SW7, SW10 et SW11) sont fournis pour communiquer du courant généré par le champ faiblissant de chaque électro-aimant (3 ou 10) de chacun des ensembles à un électro-aimant respectif des électro-aimants (10 ou 3) de l'autre des ensembles pour tendre à générer dans ledit électro-aimant respectif des électro-aimants (10 ou 3) de l'autre des ensembles ladite tension pulsée.

2. Moteur selon la revendication 1, dans lequel le nombre d'aimants permanents (7 ou 10) de chaque ensemble est inférieur d'une unité au nombre d'électro-aimants (3 ou 9) de chaque ensemble.

3. Moteur selon la revendication 1 ou 2, dans lequel les premier et second ensembles sont espacés axialement.

4. Moteur selon la revendication 1, 2 ou 3, comportant un moyen de commutation commandé par microprocesseur commandant lesdites impulsions de tension et commandant la communication dudit courant.

5. Moteur selon la revendication 4, dans lequel le moyen de commutation est transistorisé.

6. Moteur selon l'une quelconque des revendications précédentes, dans lequel les impulsions de tension pour le premier ensemble d'électro-aimants (3) sont générées à partir d'une tension continue et dans lequel les impulsions de tension pour le second ensemble d'électro-aimants (9) sont générées à partir d'une grandeur égale de tension continue mais de polarité opposée.

7. Moteur selon l'une quelconque des revendications précédentes, dans lequel ledit moyen de communication (SW2, SW3, SW6, SW7, SW10, SW11) est disposé pour communiquer ledit courant provenant de chaque électro-aimant (3 ou 9) d'un ensemble à l'électro-aimant (9 ou 3) de l'autre ensemble qui est contigu dans le sens angulaire à chaque dit électro-aimant (3 ou 9).

8. Moteur selon l'une quelconque des revendications précédentes, comportant un moyen (M) pour régler la longueur des impulsions de tension.

9. Moteur selon l'une quelconque des revendications précédentes, dans lequel ledit moyen d'application de tension (15) est disposé pour appliquer auxdits électro-aimants (3,9) une tension qui peut être réglée d'une tension positive à une tension négative pour changer la coopération entre les aimants permanents (7,10) et les électro-aimants (3,9) entre un mode de répulsion et un mode d'attraction.

10. Moteur selon l'une quelconque des revendications précédentes, comportant un moyen de localisation de position (16,17) pour détecter les positions relatives entre les aimants permanents (10,7) et les électro-aimants (9,3) pour synchroniser les impulsions de tension.

11. Moteur selon la revendication 10, dans lequel le moyen de localisation de position (16,17) comporte un dispositif à effet Hall.

12. Moteur selon la revendication 10, dans lequel le moyen de localisation de position (16,17) comporte une cellule photoélectrique.

13. Moteur selon l'une quelconque des revendications précédentes, dans lequel ledit moyen d'application de tension (15) comporte un moyen (M) pour conformer les impulsions de tension.
